# EUROPEAN PATENT SPECIFICATION

(11) **EP 4 629 644 B1**
(45) Date of publication and mention of the grant of the patent: **02.12.2026**
(21) Application number: 23897109.7
(22) Date of filing: 26.06.2023
(51) Int. Cl.: G09G 5/00, H04N 5/765, H04N 21/44, H04N 21/436

(54) **AUDIO REPRODUCTION DEVICE, CONTROL METHOD, AND PROGRAM**
AUDIOWIEDERGABEVORRICHTUNG, STEUERUNGSVERFAHREN UND PROGRAMM
DISPOSITIF DE REPRODUCTION AUDIO, PROCÉDÉ DE COMMANDE ET PROGRAMME

(30) Priority: 30.11.2022 JP 2022192021
(43) Date of publication of application: 08.10.2025
(73) Proprietor: Panasonic Intellectual Property Management Co., Ltd., Kadoma-shi, Osaka 571-0057 (JP)
(72) Inventor: OKUDA, Tadayoshi, Kadoma-shi, Osaka 571-0057 (JP); INOUE, Yoshifumi, Kadoma-shi, Osaka 571-0057 (JP); ITANI, Tetsuya, Kadoma-shi, Osaka 571-0057 (JP)
(74) Representative: Novagraaf International SA
(86) International application number: PCT/JP2023/023611
(87) International publication number: WO 2024/116449

(56) References cited:
- WO-A1-2017/209097
- US-A1- 2015 326 919
- US-A1- 2020 344 445
- US-A1- 2021 098 011
- US-A1- 2021 203 966

## Description

### [Technical Field]

The present disclosure relates to an audio reproduction apparatus, a control method, and a program.

### [Background Art]

Conventionally, in the High-Definition Multimedia Interface (HDMI) (registered trademark) standard, an audio return channel (ARC) signal is used to cause a source apparatus to reproduce an audio signal output by a sink apparatus (see Patent Literature (PTL) 1, for example).

US2020/344445 A1 discloses an electronic apparatus including a receiver and a transmitter. The receiver receives video signals from an external electronic apparatus through a cable conforming to the HDMI standard. The receiver also receives information for transferring a signal using the ARC or eARC function of the HDMI standard. The transmitter transmits a position information signal or an audio signal to the external electronic apparatus through the cable, according to the received information. US 2021/098011 A1 discloses a system and method for generating output audio data streams for audio endpoints. The system processes audio data received over the ARC or eARC interface of HDMI from audio sources. The system includes a loopback application that routes audio data received over the ARC or eARC interface from the audio sources to the audio endpoints.

### [Citation List]

### [Patent Literature]

[PTL 1] PTL 1: WO 2017/209097

### [Summary of Invention]

### [Technical Problem]

According to the HDMI standard, when the ARC signal is transmitted, video data need to be transmitted from the source apparatus to the sink apparatus. At this time, the transmission may cause a problem that the video data affects the quality of the audio sound reproduced by the source apparatus.

The present disclosure provides an audio reproduction apparatus, an audio sound reproduction method, and a program that suppress influences over the quality of an audio sound reproduced by a source apparatus which are caused by video data transmitted from a source apparatus to a sink apparatus.

### [Solution to Problem]

The communication control method according to the present disclosure is an audio reproduction apparatus that is a source apparatus connected to a sink apparatus in a High-Definition Multimedia Interface (HDMI) standard, the audio reproduction apparatus including: an audio return channel (ARC) receiver that receives an ARC signal from the sink apparatus; and a video processor that transmits first video data including pixel data in which all of bits have a same value in a YCbCr pixel encoding, to the sink apparatus, when the ARC receiver is receiving the ARC signal.

### [Advantageous Effects of Invention]

The communication control method according to the present disclosure can suppress influences over an ARC signal caused by video data transmitted from a source apparatus to a sink apparatus.

### [Brief Description of Drawings]

[FIG. 1]

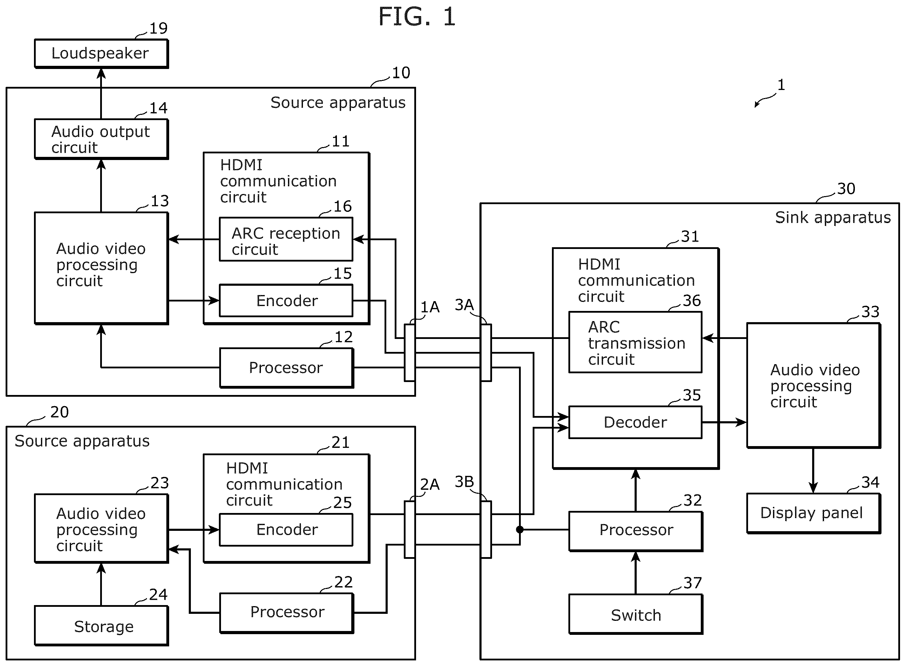

   FIG. 1 is a diagram illustrating a system according to an embodiment.
[FIG. 2]

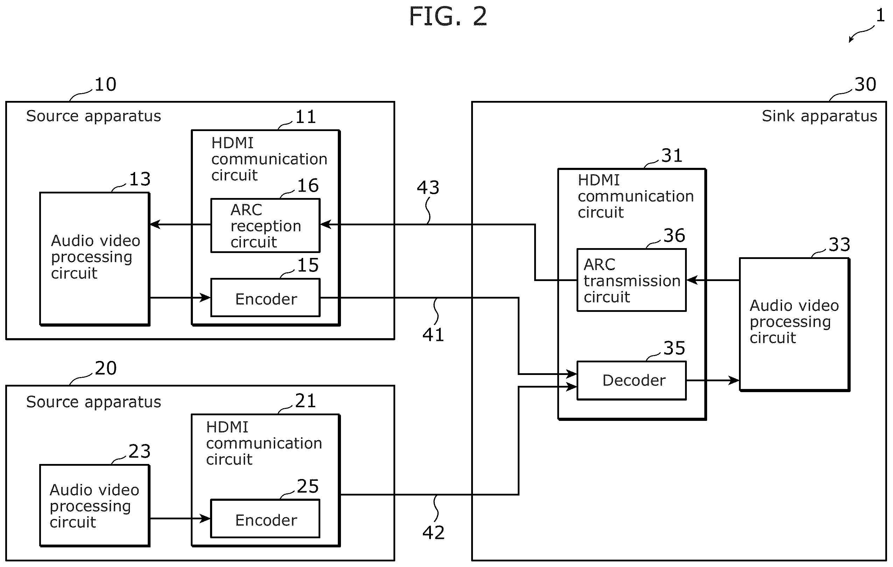

   FIG. 2 is a first diagram illustrating signals transmitted and received between a source apparatus and a sink apparatus in the system according to the embodiment.
[FIG. 3]

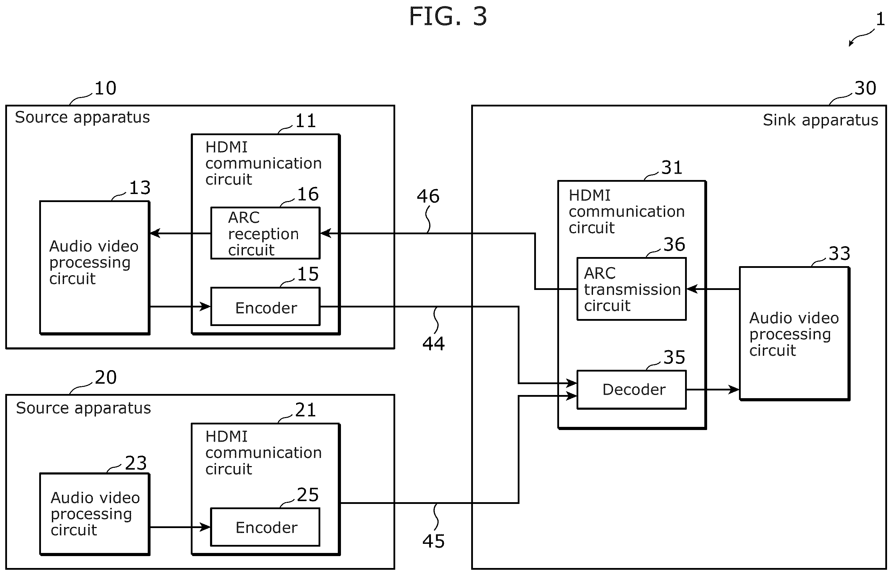

   FIG. 3 is a second diagram illustrating signals transmitted and received between the source apparatus and the sink apparatus in the system according to the embodiment.
[FIG. 4]

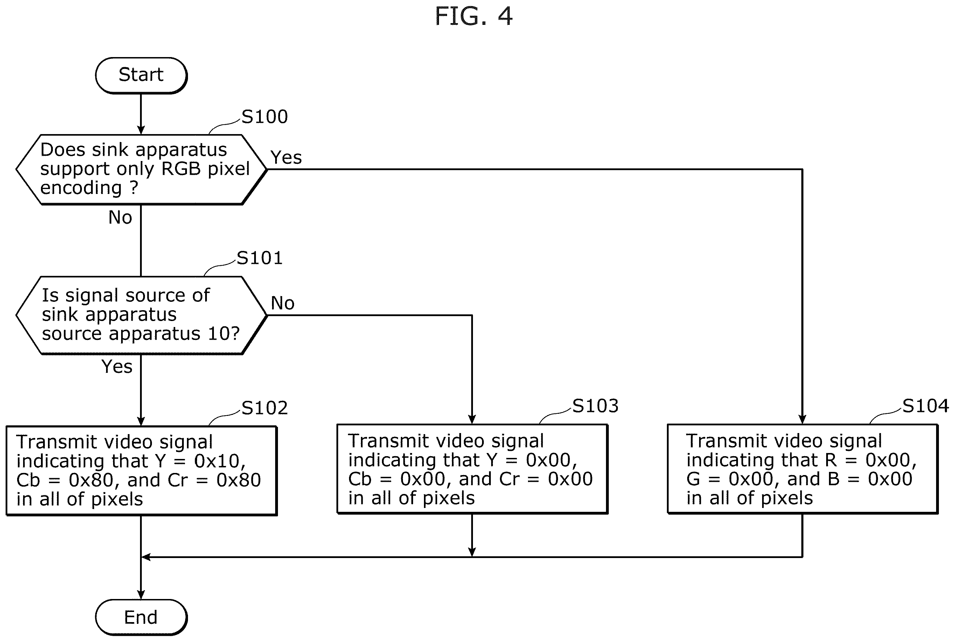

   FIG. 4 is a flowchart illustrating a flow of processing to be executed by the source apparatus in the system according to the embodiment.
[FIG. 5]

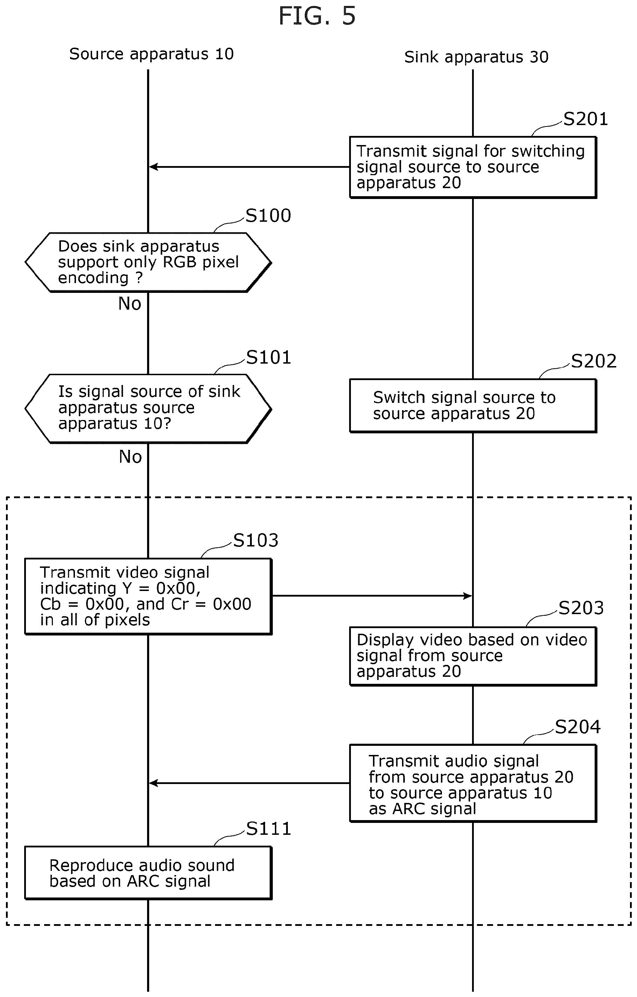

   FIG. 5 is a sequence diagram illustrating a flow of first processing to be executed by the system according to the embodiment.
[FIG. 6]

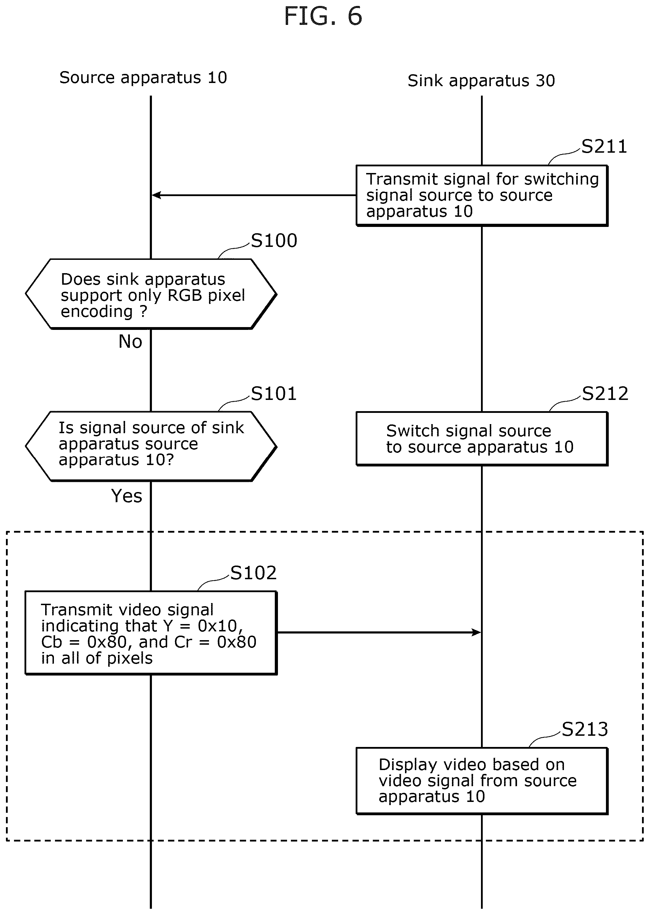

   FIG. 6 is a sequence diagram illustrating a flow of second processing to be executed by the system according to the embodiment.

### [Description of Embodiments]

### (Underlying Knowledge Forming Basis of the Present Disclosure)

The present inventors have found that the technique of transmitting video data in the HDMI standard, which is described in "Background", has a problem described below.

According to the HDMI standard, when an ARC signal is transmitted, the source apparatus transmits video data to the sink apparatus.

The video data is received and processed by the HDMI communication circuit of the sink apparatus. At this time, depending on the configuration of the HDMI communication circuit (for example, large scale integrated (LSI) circuit), the circuit may cause noises attributed to the video data received, and the noises may be superimposed on the ARC signal, resulting in reduced quality of the audio sound reproduced. For example, when a bit value contained in pixel data included in the video data is different from its adjacent bit value, noises attributed to a temporal variation in bit value input to the circuit may be caused within the circuit. When these noises propagate through an HDMI cable and enter an audio sound reproducer of the source apparatus, the noises may be contained in the audio sound reproduced by the source apparatus, resulting in reduced quality of the audio sound reproduced.

Alternatively, depending on the configuration of the circuit (such as LSI) included in the HDMI communication circuit of the source apparatus, when a bit value contained in the pixel data included in the video data to be transmitted is different from its adjacent bit value, noises attributed to a temporal variation in bit value output by the circuit may be caused within the circuit. When the noises enter the audio sound reproducer of the source apparatus, the noises may be contained in the audio sound reproduced, resulting in reduced quality of the audio sound reproduced.

Thus, the HDMI standard has a problem such that the video data transmitted from the source apparatus to the sink apparatus during transmission of the ARC signal may affect the quality of the audio sound reproduced by the source apparatus.

The present disclosure provides an audio reproduction apparatus, an audio sound reproduction method, and a program that suppress influences over the quality of an audio sound reproduced by the source apparatus which are caused by the video data transmitted from a source apparatus to a sink apparatus.

Hereinafter, modes obtained from the contents disclosed in this specification, and the effects and the like of the modes will be described.
(1) An audio reproduction apparatus that is a source apparatus connected to a sink apparatus in a High-Definition Multimedia Interface (HDMI) standard, the audio reproduction apparatus including: an audio return channel (ARC) receiver that receives an ARC signal from the sink apparatus; and a video processor that transmits first video data including pixel data in which all of bits have a same value in a YCbCr pixel encoding, to the sink apparatus, when the ARC receiver is receiving the ARC signal.

According to the above aspect, because all of the bits in the pixel data included in the first video data have the same value in the YCbCr pixel encoding, a variation in bit value input to the HDMI communication circuit of the sink apparatus is suppressed. As a result, noises which may be generated by the HDMI communication circuit of the sink apparatus can be suppressed, and a reduction in quality of the audio sound reproduced by the source apparatus can be suppressed. Thus, the audio reproduction apparatus can suppress influences over the quality of the audio sound reproduced after the source apparatus receives the ARC signal which are caused by the video data transmitted from the source apparatus to the sink apparatus.

(2) The audio reproduction apparatus according to (1), wherein the video processor transmits the first video data having 0 as the same value.

According to the above aspect, all of the bits in the pixel data included in the first video data have 0 in the YCbCr pixel encoding. In the processing executed by the HDMI communication circuit of the sink apparatus, in some cases, pixel data located outside a region corresponding to pixels forming a video contained in the first video data may be added to the first video data, and the video is decoded. The pixel data located outside the region may be 0. In this case, when all of the bits in the pixel data included in the first video data are 0 in the YCbCr pixel encoding, a variation in bit value input to the HDMI communication circuit of the sink apparatus can be further suppressed. Thus, the audio reproduction apparatus can further suppress influences over the quality of the audio sound reproduced after the source apparatus receives the ARC signal which are caused by the video data transmitted from the source apparatus to the sink apparatus.

(3) The audio reproduction apparatus according to (1) or (2), wherein as the first video data, the video processor transmits video data satisfying at least one of: (a) a resolution being 480p or 576p; (b) a pixel encoding of YCbCr 4:2:2 or 4:2:0; (c) a deep color mode being disabled; or (d) a pixel repetition setting being disabled.

According to the above aspect, a variation in bit value contained in the first video data can be suppressed. For example, by using a relatively low resolution of 480p or 576p as the resolution, the number of bits needed for transmission is reduced, and a variation in bit value contained in the first video data is suppressed. For example, when YCbCr 4:2:2 or 4:2:0 is used as the pixel encoding, the number of bits needed for transmission is reduced compared to the case where YCbCr 4:4:4 is used, and a variation in bit value contained in the first video data is suppressed. For example, when the deep color mode and the pixel repetition setting are each disabled, the number of bits needed for transmission is reduced compared to the case where these are effective, and a variation in bit value contained in the first video data is suppressed. Thus, the audio reproduction apparatus can further suppress influences over the quality of the audio sound reproduced after the source apparatus receives the ARC signal which are caused by the video data transmitted from the source apparatus to the sink apparatus.

(4) The audio reproduction apparatus according to any one of (1) to (3), wherein the video processor determines whether the sink apparatus supports a pixel encoding of YCbCr 4:2:2 or 4:2:0, and transmits the first video data having 0 as the same value only when the video processor determines that the sink apparatus supports the pixel encoding .

According to the above aspect, when the sink apparatus supports a pixel encoding of YCbCr 4:2:2 or 4:2:0, all of the bits in the pixel data included in the first video data have 0 in the YCbCr pixel encoding. Thus, the audio reproduction apparatus can further suppress influences over the quality of the audio sound reproduced after the source apparatus receives the ARC signal which are caused by the video data transmitted from the source apparatus to the sink apparatus.

(5) The audio reproduction apparatus according to any one of (1) to (4), wherein the video processor transmits second video data different from the first video data to the sink apparatus when the video processor receives a switching signal indicating switching of a signal source of the sink apparatus to the audio reproduction apparatus.

According to the above aspect, display of the video based on the first video data, which the source apparatus outputs, by the sink apparatus is avoided. As described above, the first video data is a signal including a signal for suppressing a variation in bit value input to the HDMI communication circuit of the sink apparatus, and viewing of the video based on the first video data by the user is not assumed. For example, the video based on the first video data including pixel data in which all of the bits are 0 in the YCbCr pixel encoding is a video in which all of the pixels on the screen are green. For this reason, when the user views the video based on the first video data, the user may feel unnaturalness. Thus, when the signal source of the sink apparatus is set to the audio reproduction apparatus, unnaturalness that the user feels can be suppressed by causing the sink apparatus to display the second video data different from the first video data. Thus, as described above, the audio reproduction apparatus can suppress unnaturalness given to the user, and can suppress influences over the quality of the audio sound reproduced after the source apparatus receives the ARC signal which are caused by the video data transmitted from the source apparatus to the sink apparatus.

(6) The audio reproduction apparatus according to (5), wherein the second video data is data indicating a video in which all of pixels are black.

According to the above aspect, since the video based on the second video data is a video in which all of the pixels are black, the unnaturalness that the user who views the video may feel when the user views the video based on the first video data (for example, the video in which all of the pixels are green) can be suppressed. Thus, as described above, the audio reproduction apparatus can easily suppress the unnaturalness given to the user, and can suppress influences of the video data transmitted from the source apparatus to the sink apparatus over the quality of the audio sound reproduced after the source apparatus receives the ARC signal.

(7) The audio reproduction apparatus according to (5), wherein the second video data is data indicating a predetermined video.

According to the above aspect, because the video based on the second video data is a predetermined video, the unnaturalness that the user who views the video feels can be suppressed. Thus, as described above, the audio reproduction apparatus can easily suppress the unnaturalness given to the user, and can suppress influences over the quality of the audio sound reproduced after the source apparatus receives the ARC signal which are caused by the video data transmitted from the source apparatus to the sink apparatus.

(8) A method of controlling an audio reproduction apparatus that is a source apparatus connected to a sink apparatus in a High-Definition Multimedia Interface (HDMI) standard, the method including: receiving an audio return channel (ARC) signal from the sink apparatus; and transmitting first video data including pixel data in which all of bits have a same value in a YCbCr pixel encoding, to the sink apparatus when the ARC signal is being received.

The above aspect attains the same effect as that of the audio reproduction apparatus.

(9) A program causing a computer to execute the method according to (8).

The above aspect attains the same effect as that of the audio reproduction apparatus.

Hereinafter, an embodiment will be described in detail with reference to the drawings properly. To be noted, detailed descriptions beyond necessity will be omitted in some cases. For example, detailed descriptions of things already well known and overlapping descriptions of substantially identical configurations may be omitted in some cases. This is for avoiding unnecessarily redundant description below and facilitating understanding by persons skilled in the art.

The inventors provide the accompanying drawings and the description below for sufficient understanding of the present disclosure by persons skilled in the art, and does not intend to limit the subjects described to CLAIMS.

### [Embodiment]

In the present embodiment, an audio reproduction apparatus and the like that suppress influences over the quality of an audio sound reproduced after the source apparatus receives an ARC signal which are caused by video data transmitted from a source apparatus to a sink apparatus will be described.

### [1 Configuration of system 1]

FIG. 1 is a diagram illustrating system 1 according to the present embodiment.

As illustrated in FIG. 1, system 1 includes at least source apparatus 10 and sink apparatus 30. System 1 may further include source apparatus 20. Here, a case where two source apparatuses are included will be described as an example. The number of source apparatuses included may be one, or may be two or more.

Source apparatus 10 and sink apparatus 30, and source apparatus 10 and source apparatus 20 are connected through HDMI cables to perform communication in accordance with the HDMI standard.

### [1-1 Configuration of source apparatus 10]

Source apparatus 10 can transmit video data and audio data to sink apparatus 30. Source apparatus 10 includes port 1A as an HDMI port, and is connected via port 1A to sink apparatus 30 with an HDMI cable. Port 1A supports ARC. In other words, port 1A can receive an ARC signal, and the received ARC signal is processed by source apparatus 10.

Source apparatus 10 communicates with sink apparatus 30 through the HDMI cable in accordance with the HDMI standard. Source apparatus 10 receives the ARC signal from sink apparatus 30, and outputs an audio sound based on the received ARC signal. For example, source apparatus 10 is an audio amplifier, a soundbar, or an amplifier built-in loudspeaker.

Source apparatus 10 includes HDMI communication circuit 11, processor 12, audio video processing circuit 13, and audio output circuit 14. Part or all of HDMI communication circuit 11, processor 12, audio video processing circuit 13, and audio output circuit 14 may be implemented by executing a program stored in a memory by a central processing unit (CPU) included in source apparatus 10.

HDMI communication circuit 11 transmits a signal in accordance with the HDMI standard via port 1A to sink apparatus 30. HDMI communication circuit 11 receives the signal in accordance with the HDMI standard via port 1A from sink apparatus 30.

HDMI communication circuit 11 includes encoder 15 and ARC reception circuit 16.

Encoder 15 transmits a TMDS signal (also referred to as video audio signal) to sink apparatus 30 in accordance with the HDMI standard. The TMDS signal includes digital data of the video (also referred to as video data), digital data of the audio sound (also referred to as audio data), and control information including the resolution of the video data and the sampling rate of the audio data. Encoder 15 generates the TMDS signal by encoding (i.e., coding) the video data and the audio data provided from audio video processing circuit 13, and transmits the generated TMDS signal to sink apparatus 30.

ARC reception circuit 16 receives the ARC signal from sink apparatus 30 in accordance with the HDMI standard. The ARC signal includes the audio data. ARC reception circuit 16 provides the received ARC signal to audio video processing circuit 13. ARC reception circuit 16 is one example of the ARC receiver.

Processor 12 controls the circuit and the like included in source apparatus 10. Specifically, processor 12 performs processing concerning control between devices in source apparatus 10 and sink apparatus 30. Processor 12 performs processing concerning the above-mentioned control by transmitting and receiving a consumer electronics control (CEC) signal. For example, processor 12 transmits a signal indicating the operation of source apparatus 10 or a signal for controlling the operation of sink apparatus 30, as the CEC signal, to sink apparatus 30. Processor 12 receives a signal indicating the operation of sink apparatus 30 or a signal for controlling the operation of source apparatus 10, as the CEC signal, from sink apparatus 30. More specifically, the CEC signal includes a signal indicating switching of the signal source of sink apparatus 30, as the signal indicating the operation of sink apparatus 30. Processor 12 receives the signal indicating switching of the signal source of sink apparatus 30 by receiving the CEC signal from sink apparatus 30.

Processor 12 can control the operation of audio video processing circuit 13 (specifically, transmission of the video data or the audio data).

Audio video processing circuit 13 performs processing concerning the video and the audio sound. Audio video processing circuit 13 generates video data and audio data indicating the video and the audio sound to be transmitted to sink apparatus 30, and provides the generated video data and audio data to HDMI communication circuit 11 (specifically, encoder 15), thereby transmitting these to sink apparatus 30. Audio video processing circuit 13 receives the ARC signal transmitted by sink apparatus 30, through HDMI communication circuit 11 (specifically, ARC reception circuit 16). When audio video processing circuit 13 has received the ARC signal, audio video processing circuit 13 generates the audio data based on the received ARC signal, and provides the audio data to audio output circuit 14. The operation of audio video processing circuit 13 can be controlled by processor 12. Audio video processing circuit 13 is one example of the video processor.

When ARC reception circuit 16 is receiving the ARC signal, to sink apparatus 30, audio video processing circuit 13 transmits video data in which all the bits in the pixel data have the same value in the YCbCr pixel encoding (also referred to as first video data). More specifically, the first video data is video data including the pixel data represented as Y = 0x00, Cb = 0x00, and Cr = 0x00 in the YCbCr pixel encoding. This corresponds to the case where the above expression "the same value" is 0. This pixel data represents green when it is displayed on display panel 34. "0x" represents a numeric value in hexadecimal.

Thereby, a variation in bit value of the video data input to HDMI communication circuit 31 of sink apparatus 30 is suppressed, contributing to a suppression in noises that can be caused by the circuit.

The first video data may be video data other than the above-mentioned video data, the video data including pixel data represented by Y = 0xff, Cb = 0xff, and Cr = 0xff in the YCbCr pixel encoding. This corresponds to the above-mentioned case where the "same value" is 1. To be noted, in processing of decoding the video data, in some cases, pixel data represented as Y = 0x00, Cb = 0x00, and Cr = 0x00 may be added to a region outside the region corresponding to pixels forming the video. In such cases, use of the video data including the pixel data represented as Y = 0x00, Cb = 0x00, and Cr = 0x00 further reduces a variation in bit value input to HDMI communication circuit 31 of sink apparatus 30. The region outside the region corresponding to the pixels forming the video can be a region corresponding to a blanking period.

Audio video processing circuit 13 may transmit, as the first video data, the video data satisfying at least one of that the resolution is 480p or 576p, that the pixel encoding is YCbCr 4:2:2 or 4:2:0, that the deep color mode is disabled, or that the pixel repetition setting is disabled. Here, the deep color mode and the pixel repetition setting are items to be set that can be described in extended display identification data (EDID) in the HDMI standard. This can further contribute to a suppression in variation in bit value of the video data input to HDMI communication circuit 31 of sink apparatus 30.

Audio video processing circuit 13 can determine the value included in the first video data according to the pixel encoding supported by sink apparatus 30. In other words, audio video processing circuit 13 can determine whether sink apparatus 30 supports the pixel encoding of YCbCr 4:2:2 or 4:2:0, and can transmit the first video data having the same value of 0 only when it determines that sink apparatus 30 supports the pixel encoding.

Audio video processing circuit 13 can also change the video data to be transmitted to sink apparatus 30, according to the CEC signal received by processor 12. The CEC signal corresponds to a switching signal indicating that switching of the signal source of sink apparatus 30. In other words, when audio video processing circuit 13 receives the switching signal indicating switching of the signal source of sink apparatus 30 to source apparatus 10, audio video processing circuit 13 can transmit the video data different from the first video data (also referred to as second video data) to sink apparatus 30. The second video data may be a signal indicating a video where all the pixels are black, or may be a signal indicating a predetermined video. A pixel having a color of black is represented as Y = 0x10, Cb = 0x80, and Cr = 0x80 in the YCbCr pixel encoding. The processing of audio video processing circuit 13 will be described in detail later.

Audio output circuit 14 reproduces the audio sound by outputting the audio signal to loudspeaker 19. Audio output circuit 14 includes an amplifier (not illustrated), which amplifies the audio sound reproduced. When the audio data based on the ARC signal from sink apparatus 30 is provided from audio video processing circuit 13, audio output circuit 14 converts the provided audio data to the audio signal, which is amplified by the amplifier, is provided to loudspeaker 19, and is reproduced by loudspeaker 19 as the audio sound. As illustrated in FIG. 1, loudspeaker 19 may be a loudspeaker disposed outside source apparatus 10, or may be a loudspeaker (not illustrated) included in source apparatus 10.

Source apparatus 20 can transmit the video and the audio sound to sink apparatus 30. Source apparatus 20 includes port 2A which is an HDMI port, and is connected to sink apparatus 30 via port 2A with an HDMI cable. Port 2A does not support ARC. In other words, port 2A cannot receive the ARC signal, or if it can receive it, does not perform processing on the received ARC signal.

### [1-2 Configuration of source apparatus 20]

Source apparatus 20 communicates with sink apparatus 30 through an HDMI cable in accordance with the HDMI standard. For example, source apparatus 20 is a recording apparatus (specifically, a Blu-ray(registered trademark) recorder or a DVD recorder) or a reproducing apparatus (specifically, a Blu-ray player or a DVD player).

Source apparatus 20 includes HDMI communication circuit 21, processor 22, audio video processing circuit 23, and storage 24. Part or all of HDMI communication circuit 21, processor 22, and audio video processing circuit 23 may be implemented by executing a program stored in a memory by a central processing unit (CPU) included in source apparatus 20.

HDMI communication circuit 21 transmits a signal in accordance with the HDMI standard via port 2A to sink apparatus 30. HDMI communication circuit 21 receives the signal in accordance with the HDMI standard via port 2A from sink apparatus 30.

HDMI communication circuit 21 includes encoder 25. Encoder 25 is the same as encoder 15 included in source apparatus 10, and the detailed description thereof will be omitted.

Processor 22 controls a circuit and the like included in source apparatus 20. Specifically, processor 22 performs processing concerning control between devices in source apparatus 20 and sink apparatus 30 by transmitting and receiving the CEC signal to and from sink apparatus 30. This processing is the same as the processing executed by processor 12 included in source apparatus 10, and the detailed description thereof will be omitted.

Processor 22 also controls the operation of audio video processing circuit 23 which obtains the video data and the audio data from storage 24.

Audio video processing circuit 23 performs processing concerning the video and the audio sound. Audio video processing circuit 23 obtains video data and audio data from storage 24 under control by processor 22, the video data and the auto data indicating a video and an audio sound to be transmitted to sink apparatus 30. Then, audio video processing circuit 23 provides the obtained video data and audio data to HDMI communication circuit 21 (specifically, encoder 25), thereby transmitting these to sink apparatus 30. To be noted, audio video processing circuit 23 does not perform processing when the ARC signal is received. This is based on that port 2A does not support ARC.

Storage 24 is a memory device that stores the video data and the audio data. Storage 24 stores the video data and audio data to be transmitted from source apparatus 20 to sink apparatus 30, and audio video processing circuit 23 reads out the video data and the audio data. Storage 24 is a Blu-ray disc drive including a Blu-ray disc set therein, a hard disk drive (HDD), or a solid state drive (SSD).

### [1-3 Configuration of sink apparatus 30]

Sink apparatus 30 receives the video data and the audio data from source apparatus 10 or source apparatus 20, displays a video according to the video data on display panel 34, and outputs an audio sound according to the audio data from source apparatus 10. Sink apparatus 30 includes ports 3A and 3B that are HDMI ports, and is connected to source apparatus 10 via HDMI port 3A with an HDMI cable, and is connected to source apparatus 20 via HDMI port 3B with an HDMI cable. Port 3A supports ARC. Port 3B does not support ARC.

Sink apparatus 30 communicates with source apparatus 10 and source apparatus 20 through the HDMI cables in accordance with the HDMI standard.

Sink apparatus 30 can switch the signal source based on an operation by a user. The sender of the video data according to the video displayed by sink apparatus 30 and the audio data according to the audio sound output by sink apparatus 30 is referred to as signal source. The signal source is selected from a plurality of source apparatuses connected to sink apparatus 30 (i.e., source apparatuses 10 and 20), tuners (such as a tuner that receives land broadcasting and a tuner which receives satellite broadcasting), and storages. For example, sink apparatus 30 is a television receiver.

Sink apparatus 30 includes HDMI communication circuit 31, processor 32, audio video processing circuit 33, and display panel 34. Part or all of HDMI communication circuit 31, processor 32, and audio video processing circuit 33 may be implemented by executing a program stored in a memory by a CPU included in sink apparatus 30.

HDMI communication circuit 31 receives signals in accordance with the HDMI standard (including the TMDS signal and the CEC signal) via ports 3A and 3B from source apparatuses 10 and 20, respectively. HDMI communication circuit 31 transmits a signal in accordance with the HDMI standard (including the ARC signal) via port 3A to source apparatus 10.

HDMI communication circuit 31 includes decoder 35 and ARC transmission circuit 36.

Decoder 35 receives the TMDS signal from source apparatuses 10 and 20 in accordance with the HDMI standard. Among the received TMDS signals, decoder 35 decodes one TMDS signal selected as the signal source, thereby obtaining the video data and the audio data. Then, decoder 35 provides the obtained video data and audio data to audio video processing circuit 33. Selection of the signal source is performed under control by processor 32 when an operation by the user or a CEC signal is received.

ARC transmission circuit 36 transmits the ARC signal to source apparatus 10 in accordance with the HDMI standard. ARC transmission circuit 36 transmits the audio signal provided from audio video processing circuit 33 to source apparatus 10 as the ARC signal. When a storage or a tuner is selected as the signal source, the audio signal received by the tuner or the audio signal stored in the storage is provided from audio video processing circuit 33 to ARC transmission circuit 36, and ARC transmission circuit 36 transmits the audio signal thus provided, as the ARC signal, to source apparatus 10.

Processor 32 controls the circuit and the like included in sink apparatus 30. Processor 32 also performs processing concerning control between devices in source apparatuses 10 and 20 and sink apparatus 30. Processor 32 performs the processing concerning control by transmitting and receiving the CEC signal. For example, processor 32 transmits a signal indicating the operation of sink apparatus 30 or a signal for controlling the operation of source apparatus 10 or 20, as the CEC signal, to source apparatuses 10 and 20. Processor 32 receives a signal indicating the operation of source apparatus 10 or 20 or a signal for controlling the operation of sink apparatus 30, as the CEC signal, from source apparatus 10 or 20. Specifically, during switching of the signal source, as the signal indicating the operation of sink apparatus 30, processor 32 transmits the signal indicating switching of the signal source of sink apparatus 30, as the CEC signal, to source apparatuses 10 and 20.

Processor 32 performs processing concerning selection of the signal source of sink apparatus 30. Specifically, when an operation by the user is performed on switch 37, processor 32 performs the processing. The operation includes the operation to select the signal source. When the operation to select the signal source is performed, processor 32 determines the signal source from the content of the operation. When the determined signal source is either source apparatus 10 or source apparatus 20, processor 32 sets the determined signal source to HDMI communication circuit 31. When processor 32 receives control to change the signal source as the CEC signal, processor 32 sets the signal source to HDMI communication circuit 31 according to the control.

Audio video processing circuit 33 performs processing concerning the video and the audio sound.

When the signal source is either source apparatus 10 or source apparatus 20, audio video processing circuit 33 obtains the video data and audio data that are obtained by decoder 35 by decoding. When the signal source is a tuner or a storage, audio video processing circuit 33 obtains video data and audio data from the tuner or the storage. From the obtained video data, audio video processing circuit 33 calculates the pixel values of a plurality of pixels forming the video, and provides information indicating the pixel values to display panel 34, thereby displaying the video based on the video data on display panel 34.

By providing the obtained audio data to HDMI communication circuit 31, audio video processing circuit 33 provides the audio data as the ARC signal to source apparatus 10, and causes source apparatus 10 to reproduce the audio sound based on the audio data.

In some cases, depending on the configuration of the circuit constituting audio video processing circuit 33, audio video processing circuit 33 may generate noises attributed to the received video data, and the noises may be superimposed on the ARC signal. For example, the circuit generates noises attributed to a temporal variation in bit value of the video data input to the circuit. In this case, for example, the generated noises can be reduced or eliminated by reducing or eliminating a temporal variation in bit value of the video data.

For example, in the video data including the pixel data in which all the bits have the same value in the YCbCr pixel encoding, the temporal variation in bit value of the video data is relatively small.

Furthermore, when the same value is 0, the temporal variation in bit value of the video data can become smaller. When at least one of that the resolution is 480p or 576p, that the pixel encoding is YCbCr 4:2:2 or 4:2:0, that the deep color mode is disabled, or that the pixel repetition setting is disabled is satisfied, the temporal variation in bit value of the video data can become smaller.

Display panel 34 displays the video. Display panel 34 obtains information including the pixel values of a plurality of pixels from audio video processing circuit 33, and displays the video based on the obtained information.

Switch 37 receives an operation on sink apparatus 30 by the user. Switch 37 is disposed in the housing of the main body of sink apparatus 30 or in a remote controller of sink apparatus 30. Switch 37 can be a button or a slide switch, for example. Switch 37, after receiving the operation from the user, provides information indicating the content of the operation to processor 32.

### [2 Signals transmitted and received between source apparatuses 10 and 20 and sink apparatus 30]

FIG. 2 is a first diagram illustrating signals transmitted and received between source apparatuses 10 and 20 and sink apparatus 30 in system 1 according to the present embodiment. FIG. 2 illustrates part of the components concerning the transmission and reception of the signals in FIG. 1.

FIG. 2 illustrates the signals transmitted and received between source apparatuses 10 and 20 and sink apparatus 30 in a state where sink apparatus 30 selects source apparatus 20 as the signal source. The diagram illustrates a state where sink apparatus 30 decodes video audio signal 42 received from source apparatus 20 by decoder 35, displays the video data processed in audio video processing circuit 33, and transmits ARC signal 43 to ARC transmission circuit 36, ARC signal 43 containing the audio data processed in audio video processing circuit 33.

As illustrated in FIG. 2, source apparatus 10 transmits video audio signal 41 to sink apparatus 30, and sink apparatus 30 receives video audio signal 41 transmitted. Source apparatus 20 transmits video audio signal 42 to sink apparatus 30, and sink apparatus 30 receives video audio signal 42 transmitted. Sink apparatus 30 transmits ARC signal 43 to source apparatus 10, and source apparatus 10 receives ARC signal 43 transmitted.

Thus, when source apparatus 10 is receiving ARC signal 43 in the state where the signal source of sink apparatus 30 is not source apparatus 10, source apparatus 10 transmits the first video data as video audio signal 41.

FIG. 3 is a second diagram illustrating signals transmitted and received between source apparatuses 10 and 20 and sink apparatus 30 in system 1 according to the present embodiment. As in FIG. 2, FIG. 3 illustrates part of the components concerning the transmission and reception of the signals in FIG. 1.

FIG. 3 illustrates the signals transmitted and received between source apparatuses 10 and 20 and sink apparatus 30 in a state where sink apparatus 30 selects source apparatus 10 as the signal source.

As illustrated in FIG. 3, source apparatus 10 transmits video audio signal 44 to sink apparatus 30, and sink apparatus 30 receives video audio signal 44 transmitted. Source apparatus 20 transmits video audio signal 45 to sink apparatus 30, and sink apparatus 30 receives video audio signal 45 transmitted. Sink apparatus 30 transmits ARC signal 46 to source apparatus 10, and source apparatus 10 receives ARC signal 46 transmitted.

Thus, source apparatus 10 transmits the second video data as video audio signal 44 in the state where the signal source of sink apparatus 30 is source apparatus 10. Here, video audio signal 44 contains audio data without sounds as the audio data or does not contain any audio data.

### [3 Processing to be executed by source apparatus 10]

FIG. 4 is a flowchart illustrating a flow of processing to be executed by source apparatus 10 in system 1 according to the present embodiment.

A series of steps in the processing illustrated in FIG. 4 is processing performed when the ARC reception circuit of source apparatus 10 is receiving the ARC signal after HDMI connection between source apparatus 10 and sink apparatus 30 and HDMI connection between source apparatus 20 and sink apparatus 30 are established. The processing according to the HDMI connection includes processing such as detection of a Hot Plug Detect (HPD) signal, provision of EDID, and function setting of ARC. EDID includes information indicating the pixel encoding. When the HDMI connection between source apparatus 20 and sink apparatus 30 is established, source apparatus 20 and sink apparatus 30 each obtain its pixel encoding supported, by transmitting and receiving EDID.

In step S100, processor 12 determines whether the pixel encoding supported by sink apparatus 30 is only RGB. When processor 12 determines that the pixel encoding supported by sink apparatus 30 is only RGB (Yes in step S101), the processing goes to step S104. Otherwise (i.e., the case where sink apparatus 30 supports at least any one of YCbCr pixel encodings) (No in step S101), the processing goes to step S101.

In step S101, processor 12 determines whether the signal source of sink apparatus 30 is source apparatus 10. Whether the signal source of sink apparatus 30 is source apparatus 10 is determined using information indicating the current signal source of sink apparatus 30 obtained from a CEC signal (corresponding to the switching signal), which indicates switching of the signal source of sink apparatus 30 and is received by source apparatus 10. When processor 12 determines that the signal source of sink apparatus 30 is source apparatus 10 (Yes in step S101), the processing goes to step S102. Otherwise (No in step S101), the processing goes to step S103.

In step S102, processor 12 sets the pixel encoding of the video transmitted to sink apparatus 30 by audio video processing circuit 13 to any one of YCbCr pixel encodings supported by sink apparatus 30. An example of the pixel encoding to be set is the YCbCr 4:2:2 or 4:2:0. Moreover, processor 12 controls audio video processing circuit 13 to transmit the video data in which Y = 0x10, Cb = 0x80, and Cr = 0x80 in all of the pixels contained in the video data (corresponding to the second video data) to sink apparatus 30.

The pixel encoding which processor 12 can set can be YCbCr 4:4:4, 4:2:2, or 4:2:0. Here, the pixel encodings are referred to as "444 format", "422 format", and "420 format", respectively.

Among the three formats above, the 444 format has the largest data quantity (communication quantity of the TMDS signal) transmitted from source apparatus 10 to sink apparatus 30, the 420 format has the smallest data quantity, and the 422 format has the data quantity therebetween. To reduce noises in the video to be reproduced, a smaller data quantity to be transmitted is desired. Thus, to reduce the data quantity transmitted from source apparatus 10 to sink apparatus 30, most desirably, processor 12 selects the 420 format among the three formats above. When sink apparatus 30 supports the 422 format or the 420 format in addition to the 444 format, desirably, processor 12 selects the 422 format or the 420 format as the pixel encoding.

In the case of the 420 format, HDMI communication circuit 31 of sink apparatus 30 that has received the video data in the 420 format may perform conversion processing to any one of the YCbCr pixel encodings (e.g., the 422 format). In contrast, in the case of the 422 format or the 444 format, HDMI communication circuit 31 of sink apparatus 30 which has received the video data in the format has no need to perform conversion processing of the pixel encoding. When HDMI communication circuit 31 performs conversion processing of the pixel encoding, it increases processing within HDMI communication circuit 31, which can cause a larger amount of noises attributed to a change in bit value of the data. For this reason, processor 12 can suppress generation of the noises if processor 12 selects the 422 format or the 444 format. Thus, to suppress generation of noises caused by the pixel encoding conversion processing and reduce the data quantity transmitted from source apparatus 10 to sink apparatus 30, processor 12 desirably selects the 422 format among the three formats above.

To be noted, processor 12 can also set the pixel encoding in consideration of at least one of the state where sink apparatus 30 supports the pixel encoding or the state where noises actually occur.

In step S103, processor 12 sets the pixel encoding of the video transmitted to sink apparatus 30 by audio video processing circuit 13 to any one of the YCbCr pixel encodings supported by sink apparatus 30. An example of the pixel encoding to be set is the YCbCr 4:2:2 or 4:2:0. Moreover, processor 12 controls audio video processing circuit 13 to transmit video data in which Y = 0x00, Cb = 0x00, and Cr = 0x00 in all of the pixels contained in the video data (corresponding to the first video data) to sink apparatus 30. Which pixel encoding processor 12 sets is determined in the same manner as that in step S102. For example, when sink apparatus 30 supports the 422 format or the 420 format in addition to the 444 format, processor 12 desirably selects the 422 format or the 420 format as the pixel encoding.

In step S104, processor 12 sets the pixel encoding of the video transmitted to sink apparatus 30 by audio video processing circuit 13. Moreover, processor 12 controls audio video processing circuit 13 to transmit video data in which R = 0x00, G = 0x00, and B = 0x00 in all of the pixels contained in the video data, to sink apparatus 30.

### [4 Processing executed by system 1]

FIG. 5 is a sequence diagram illustrating a flow of first processing to be executed by system 1 according to the present embodiment. In FIG. 5, identical reference signs are given to steps identical to those of the processing illustrated in FIG. 4, and detailed descriptions thereof will be omitted.

FIG. 5 illustrates a flow of the processing when sink apparatus 30 supports a pixel encoding of YCbCr 4:2:2 and sink apparatus 30 switches the signal source to source apparatus 20.

In step S201, sink apparatus 30 transmits the CEC signal indicating that it switches the signal source to source apparatus 20. For example, when the user performs an operation to switch the signal source to source apparatus 20 on sink apparatus 30, the operation can trigger the transmission of the CEC signal.

In step S202, sink apparatus 30 switches the signal source to source apparatus 20.

Source apparatus 10 receives the signal transmitted by sink apparatus 30 in step S201. Then, based on the reception of the signal, source apparatus 10 transmits the video data in the YCbCr pixel encoding indicating that Y = 0x00, Cb = 0x00, and Cr = 0x00 in all of the pixels (corresponding to the first video data) to sink apparatus 30 (No in step S100, No in S101, and then S103).

In step S203, sink apparatus 30 displays a video on display panel 34 based on the video data received from source apparatus 20.

In step S204, sink apparatus 30 transmits the audio signal received from source apparatus 20, as an ARC signal, to source apparatus 10.

In step S111, source apparatus 20 receives the ARC signal transmitted by sink apparatus 30 in step S204, and reproduces an audio sound by loudspeaker 19 based on the received ARC signal.

The processing of steps S112 to S113 by source apparatus 10 and the processing of S203 to S204 by sink apparatus 30 (that is, the processing within the frame represented with the dashed line in FIG. 5) are continuously executed.

Thus, by transmission of the first video data by source apparatus 10 (step S103), noises contained in the ARC signal transmitted by sink apparatus 30 are suppressed, and as a result, noises contained in the audio sound reproduced by source apparatus 10 are suppressed.

FIG. 6 is a sequence diagram illustrating a flow of second processing to be executed by system 1 according to the present embodiment. In FIG. 6, identical reference signs are given to steps identical to those of the processing illustrated in FIG. 4, and detailed descriptions thereof will be omitted.

FIG. 6 illustrates a flow of processing when sink apparatus 30 switches the signal source to source apparatus 10.

In step S211, sink apparatus 30 transmits a CEC signal indicating switching of the signal source to source apparatus 10. For example, when the user performs an operation to switch the signal source to source apparatus 10 on sink apparatus 30, the operation can trigger the transmission of the CEC signal.

In step S212, sink apparatus 30 switches the signal source to source apparatus 10.

Source apparatus 10 receives the signal transmitted by sink apparatus 30 in step S211. Then, based on the reception of the signal, source apparatus 10 transmits the video data in which Y = 0x10, Cb = 0x80, and Cr = 0x80 in all of the pixels (No in step S100, Yes in S101, and then S102).

In step S213, sink apparatus 30 displays a video on display panel 34 based on the video data received from source apparatus 10.

The processing of step S102 by source apparatus 10 and the processing of S213 by sink apparatus 30 (that is, the processing within the frame represented with the dashed line in FIG. 6) are continuously executed.

Thus, by transmission of the second video data by source apparatus 10 (step S102), unnaturalness which the user may feel due to the video displayed by sink apparatus 30 can be suppressed. In other words, because the user can view a video in which all of the pixels are black, the unnaturalness which the user may feel when the user views the video in which all of the pixels are green can be suppressed.

In the embodiment above, an example in which system 1 includes source apparatuses 10 and 20 has been described, but system 1 may include only source apparatus 10 and sink apparatus 30. In this case, source apparatus 10 reproduces the video and the audio sound obtained by sink apparatus 30 by receiving broadcasting or the video and the audio sound stored in the storage of sink apparatus 30. At this time, the signal source of sink apparatus 30 is set to a tuner that receives land broadcasting, a tuner that receives satellite broadcast, or a storage. Even in such a configuration, noises contained in the ARC signal transmitted by sink apparatus 30 are suppressed, and as a result, noises contained in the audio sound reproduced by source apparatus 10 are suppressed.

As above, the embodiment has been described as an example of the technique according to the present disclosure. For this purpose, the accompanying drawings and detailed descriptions have been given.

Accordingly, the components described in the accompanying drawings and the detailed descriptions can also include not only components essential to solving the problem, but also components which are needed for illustrating the above-mentioned implementation but are not essential to solving the problem. For this reason, these non-essential components should not be immediately recognized as essential components because those non-essential components are described in the accompanying drawings and the detailed descriptions.

The above-mentioned embodiment is an illustration of the technique in the present disclosure, and thus can be subjected to various modifications within the scope of the appended claims.

### [Industrial Applicability]

The present disclosure can be used in source apparatuses that support ARC.

### [Reference Signs List]

1 system
10, 20 source apparatus
11, 21, 31 HDMI communication circuit
12, 22, 32 processor
13, 23, 33 audio video processing circuit
14 audio output circuit
15, 25 encoder
16 ARC reception circuit
19 loudspeaker
1A, 2A, 3A, 3B port
24 storage
30 sink apparatus
34 display panel
35 decoder
36 ARC transmission circuit
37 switch
41, 42, 44, 45 video audio signal
43, 46 ARC signal

## Claims

1. An audio reproduction apparatus that is a source apparatus connected to a sink apparatus in a High-Definition Multimedia Interface (HDMI) standard, the audio reproduction apparatus comprising:
an audio return channel (ARC) receiver that receives an ARC signal from the sink apparatus; and
a video processor that transmits first video data including pixel data in which all of bits have a same value in a YCbCr pixel encoding, to the sink apparatus, when the ARC receiver is receiving the ARC signal.

2. The audio reproduction apparatus according to claim 1,
wherein the video processor transmits the first video data having 0 as the same value.

3. The audio reproduction apparatus according to claim 1,
wherein as the first video data, the video processor transmits video data satisfying at least one of:
(a) a resolution being 480p or 576p;
(b) a pixel encoding of YCbCr 4:2:2 or 4:2:0;
(c) a deep color mode being disabled; or
(d) a pixel repetition setting being disabled.

4. The audio reproduction apparatus according to claim 1, further comprising:
a processor,
wherein the processor determines whether the sink apparatus supports a pixel encoding of YCbCr 4:2:2 or 4:2:0, and controls the video processor to transmit the first video data having 0 as the same value only when the processor determines that the sink apparatus supports the pixel encoding.

5. The audio reproduction apparatus according to any one of claims 1 to 4, further comprising:
a processor,
wherein the processor controls the video processor to transmit second video data different from the first video data to the sink apparatus when the processor receives a switching signal indicating switching of a signal source of the sink apparatus to the audio reproduction apparatus.

6. The audio reproduction apparatus according to claim 5,
wherein the second video data is data indicating a video in which all of pixels are black.

7. The audio reproduction apparatus according to claim 5,
wherein the second video data is data indicating a predetermined video.

8. A method of controlling an audio reproduction apparatus that is a source apparatus connected to a sink apparatus in a High-Definition Multimedia Interface (HDMI) standard, the method comprising:
receiving an audio return channel (ARC) signal from the sink apparatus; and
transmitting first video data including pixel data in which all of bits have a same value in a YCbCr pixel encoding, to the sink apparatus when the ARC signal is being received.

9. A program causing a computer to execute the method according to claim 8.

## Patentansprüche

1. Audiowiedergabevorrichtung, die eine Quellvorrichtung ist, die mit einer Senkenvorrichtung in einem High-Definition-Multimedia-Interface-(HDMI)-Standard verbunden ist, wobei die Audiowiedergabevorrichtung umfasst:
einen Audio-Return-Channel-(ARC)-Empfänger, der ein ARC-Signal von der Senkenvorrichtung empfängt; und
einen Videoprozessor, der erste Videodaten, die Pixeldaten enthalten, in denen alle Bits einen gleichen Wert in einer YCbCr-Pixelcodierung aufweisen, an die Senkenvorrichtung überträgt, wenn der ARC-Empfänger das ARC-Signal empfängt.

2. Audiowiedergabevorrichtung nach Anspruch 1,
wobei der Videoprozessor die ersten Videodaten mit 0 als dem gleichen Wert überträgt.

3. Audiowiedergabevorrichtung nach Anspruch 1,
wobei der Videoprozessor als die ersten Videodaten Videodaten überträgt, die mindestens eines von Folgendem erfüllen:
(a) eine Auflösung von 480p oder 576p;
(b) eine Pixelcodierung von YCbCr 4:2:2 oder 4:2:0;
(c) ein deaktivierter Deep-Color-Modus; oder
(d) eine deaktivierte Pixelwiederholungseinstellung.

4. Audiowiedergabevorrichtung nach Anspruch 1, ferner umfassend:
einen Prozessor,
wobei der Prozessor bestimmt, ob die Senkenvorrichtung eine Pixelcodierung von YCbCr 4:2:2 oder 4:2:0 unterstützt, und den Videoprozessor steuert, die ersten Videodaten mit 0 als dem gleichen Wert nur dann zu übertragen, wenn der Prozessor bestimmt, dass die Senkenvorrichtung die Pixelcodierung unterstützt.

5. Audiowiedergabevorrichtung nach einem der Ansprüche 1 bis 4, ferner umfassend:
einen Prozessor,
wobei der Prozessor den Videoprozessor steuert, zweite Videodaten, die sich von den ersten Videodaten unterscheiden, an die Senkenvorrichtung zu übertragen, wenn der Prozessor ein Umschaltsignal empfängt, das ein Umschalten einer Signalquelle der Senkenvorrichtung auf die Audiowiedergabevorrichtung anzeigt.

6. Audiowiedergabevorrichtung nach Anspruch 5,
wobei die zweiten Videodaten Daten sind, die ein Video anzeigen, in dem alle Pixel schwarz sind.

7. Audiowiedergabevorrichtung nach Anspruch 5,
wobei die zweiten Videodaten Daten sind, die ein vorbestimmtes Video anzeigen.

8. Verfahren zum Steuern einer Audiowiedergabevorrichtung, die eine Quellvorrichtung ist, die mit einer Senkenvorrichtung in einem High-Definition-Multimedia-Interface-(HDMI)-Standard verbunden ist, wobei das Verfahren umfasst:
Empfangen eines Audio-Return-Channel-(ARC)-Signals von der Senkenvorrichtung; und
Übertragen erster Videodaten, die Pixeldaten enthalten, in denen alle Bits einen gleichen Wert in einer YCbCr-Pixelcodierung aufweisen, an die Senkenvorrichtung, wenn das ARC-Signal empfangen wird.

9. Programm, das einen Computer veranlasst, das Verfahren nach Anspruch 8 auszuführen.

## Revendications

1. Appareil de reproduction audio qui est un appareil source connecté à un appareil récepteur dans une norme High-Definition Multimedia Interface (HDMI), l'appareil de reproduction audio comprenant :
un récepteur de canal de retour audio (ARC) qui reçoit un signal ARC provenant de l'appareil récepteur ; et
un processeur vidéo qui transmet des premières données vidéo comprenant des données de pixel dans lesquelles tous les bits ont une même valeur dans un codage de pixel YCbCr, à l'appareil récepteur, lorsque le récepteur ARC est en train de recevoir le signal ARC.

2. L'appareil de reproduction audio selon la revendication 1,
dans lequel le processeur vidéo transmet les premières données vidéo ayant 0 comme même valeur.

3. L'appareil de reproduction audio selon la revendication 1,
dans lequel, en tant que premières données vidéo, le processeur vidéo transmet des données vidéo satisfaisant au moins l'un parmi :
(a) une résolution étant de 480p ou 576p ;
(b) un codage de pixel de YCbCr 4:2:2 ou 4:2:0 ;
(c) un mode de couleur profonde étant désactivé ; ou
(d) un réglage de répétition de pixels étant désactivé.

4. L'appareil de reproduction audio selon la revendication 1, comprenant en outre :
un processeur,
dans lequel le processeur détermine si l'appareil récepteur prend en charge un codage de pixel de YCbCr 4:2:2 ou 4:2:0, et commande le processeur vidéo pour transmettre les premières données vidéo ayant 0 comme même valeur uniquement lorsque le processeur détermine que l'appareil récepteur prend en charge le codage de pixel.

5. L'appareil de reproduction audio selon l'une quelconque des revendications 1 à 4, comprenant en outre :
un processeur,
dans lequel le processeur commande le processeur vidéo pour transmettre des deuxièmes données vidéo différentes des premières données vidéo à l'appareil récepteur lorsque le processeur reçoit un signal de commutation indiquant la commutation d'une source de signal de l'appareil récepteur vers l'appareil de reproduction audio.

6. L'appareil de reproduction audio selon la revendication 5,
dans lequel les deuxièmes données vidéo sont des données indiquant une vidéo dans laquelle tous les pixels sont noirs.

7. L'appareil de reproduction audio selon la revendication 5,
dans lequel les deuxièmes données vidéo sont des données indiquant une vidéo prédéterminée.

8. Procédé de commande d'un appareil de reproduction audio qui est un appareil source connecté à un appareil récepteur dans une norme High-Definition Multimedia Interface (HDMI), le procédé comprenant :
la réception d'un signal de canal de retour audio (ARC) provenant de l'appareil récepteur ; et
la transmission de premières données vidéo comprenant des données de pixel dans lesquelles tous les bits ont une même valeur dans un codage de pixel YCbCr, à l'appareil récepteur lorsque le signal ARC est en cours de réception.

9. Programme amenant un ordinateur à exécuter le procédé selon la revendication 8.
